# FASCICULE DE BREVET EUROPEEN

(11) **EP 3 187 921 B1**
(45) Date de publication et mention de la délivrance du brevet: **06.10.2021**
(21) Numéro de dépôt: 15307170.9
(22) Date de dépôt: 30.12.2015
(51) Int. Cl.: G02C 7/10, G02B 27/01, G02C 7/08

(54) **DISPOSITIF OPHTALMIQUE COMPRENANT UNE LENTILLE OPHTALMIQUE POUR LUNETTE ET UNE PLURALITE DE COMPOSANTS ELECTRONIQUES**
OPHTALMISCHE VORRICHTUNG, DIE EINE AUGENLINSE FÜR EINE BRILLE UMFASST, UND EINE VIELZAHL VON ELEKTRONISCHEN KOMPONENTEN
OPHTHALMIC DEVICE INCLUDING AN OPHTHALMIC LENS AND A PLURALITY OF ELECTRONIC COMPONENTS

(43) Date de publication de la demande: 05.07.2017
(73) Titulaire: Essilor International, 94220 Charenton-le-Pont (FR)
(72) Inventeur: PERROT, Stéphane, 94227 Charenton Cedex (FR); CHAUDAT, Willy, 94227 Charenton Cedex (FR); BALLET, Jérôme, 94227 Charenton Cedex (FR); ARCHAMBEAU, Samuel, 94227 Charenton Cedex (FR); CANO, Jean-Paul, 94227 Charenton Cedex (FR); ESCAICH, David, 94227 Charenton Cedex (FR)
(74) Mandataire: Plasseraud IP

(56) Documents cités:
- EP-A1- 2 063 311
- EP-A1- 2 405 295
- WO-A2-2012/068527
- WO-A2-2013/188805
- US-A1- 2012 249 797

## Description

L'invention concerne un un équipement ophtalmique comprenant au moins une monture et au moins un dispositif ophtalmique pour lunettes et une pluralité de composants électroniques.

On connait des équipements ophtalmiques permettant d'apporter une ou plusieurs fonctionnalité(s) à des lentilles ophtalmiques pour lunette de manière à contribuer à la correction de l'amétropie d'un porteur et/ou au confort visuel du porteur et/ou à lui apporter des fonctionnalités complémentaires autres que relative à la correction de la vision ou au confort visuel. On peut citer parmi les fonctionnalités connues et à titre d'exemples non limitatif : la variation de la transmission lumineuse de la lentille ophtalmique, la variation de la puissance dioptrique de la lentille ophtalmique, la présentation d'information grâce à la lentille ophtalmique.

De manière usuelle, de telles fonctionnalités peuvent être électro-commandées et un ou une pluralité de signaux électriques sont générés afin de modifier l'état de la fonctionnalité de la lentille ophtalmique en fonction de paramètres. Des composants électroniques sont notamment disposés sur ou dans un équipement ophtalmique de manière à activer et/ou à contrôler une fonctionnalité ou des fonctionnalités de la lentille ophtalmique. De manière usuelle, ces composants électroniques sont disposés sur ou dans une monture qui est apte à recevoir une paire de lentilles ophtalmiques et également à générer et transmettre des signaux électriques auxdites lentilles ophtalmiques. De tels équipements ophtalmiques nécessitent des montures d'un type particulier comprenant au préalable les composants électroniques nécessaires à l'activation et/ou au contrôle des composants électroniques pour une fonctionnalité donnée. Or de nombreuses fonctionnalités peuvent être choisies et il en résulte une grande quantité de montures qui doivent être pré-équipées avec lesdits composants électroniques. Des problèmes de stock et/ou de disponibilité desdites montures peuvent en résulter.

La Des documents présentant des lentilles de lunettes électro-actives incluent EP 2 063 311 A1, WO 2012/068527 A2 et EP 2 405 295 A1. présente invention vise notamment à résoudre ces problèmes.

Ainsi l'invention est définie dans les revendications. Elle inclut un dispositif ophtalmique qui comprend une lentille ophtalmique pour lunette et une pluralité de composants électroniques disposés sous forme d'au moins une bande au contact et en périphérie de ladite lentille ophtalmique.

On entend par « bande » une pièce plus longue que large et de faible épaisseur. Selon un mode de réalisation, une bande est longue, étroite et souple. Selon un mode de réalisation, une bande peut être manipulée et conformée pour s'adapter à une surface donnée. Selon un autre mode de réalisation, une bande est produite directement au contact de la lentille ophtalmique. Une bande au sens de la présente invention peut être ouverte ou fermée, c'est-à-dire qu'elle peut avoir respectivement deux extrémités ou bien former une boucle fermée.

La disposition d'une pluralité de composants électroniques sous forme d'une bande au contact et en périphérie de ladite lentille ophtalmique permet d'installer des composants électriques de manière solidaire à la lentille et ainsi de limiter ou de s'affranchir de composants disposés dans une monture destinée à recevoir ladite lentille ophtalmique. En outre, le choix d'une forme en bande est particulièrement avantageux car il permet de disposer lesdits composants électriques de manière discrète, par exemple dans une zone de la lentille ophtalmique qui n'est pas susceptible de gêner la vision du porteur, et il permet de positionner un nombre important de composants en les répartissant suivant la longueur de la bande.

Les points suivants sont soit déjà inclus dans les revendications (et font donc parti de l'invention), soit représentent des modes de réalisation qui peuvent être pris en combinaison.
- la lentille ophtalmique comprend deux surfaces principales et un bord reliant lesdites deux surfaces principales, et les composants électroniques disposés sous forme d'une bande sont agencés en périphérie sur le bord de ladite lentille ophtalmique ;
- la lentille ophtalmique comprend deux surfaces principales et un bord reliant lesdites deux surfaces principales, et les composants électroniques disposés sous forme d'une bande sont agencés en périphérie sur au moins une des surfaces principales de ladite lentille ophtalmique ;
- la lentille ophtalmique comprend au moins une surface interne et les composants électroniques disposés sous forme d'une bande sont agencés en périphérie sur au moins une surface interne de ladite lentille ophtalmique ;
- le bord de la lentille ophtalmique comprend une rainure dans laquelle sont agencés les composants électroniques disposés sous forme d'une bande ;
- la longueur de la bande est supérieure ou égale à 5 fois la largeur de ladite bande, par exemple la longueur de la bande est supérieure ou égale à 10 fois la largeur de ladite bande, voire par exemple la longueur de la bande est supérieure ou égale à 50 fois la largeur de ladite bande ;
- la longueur de la bande occupe au moins 5% de la périphérie de la lentille ophtalmique, par exemple au moins 10% de la périphérie de la lentille ophtalmique ;
- au moins une bande comprenant une pluralité de composants électroniques est destinée à être masquée par une partie d'une monture adaptée à recevoir le dispositif ophtalmique ;
- la lentille ophtalmique a une fonctionnalité électro-commandée activable en partie ou en totalité par au moins un des composants électroniques disposés sous forme d'une bande ;
- la lentille ophtalmique est une lentille ophtalmique à variation de phase et/ou une lentille ophtalmique à variation d'amplitude et/ou une lentille ophtalmique comprenant au moins une couche électro-commandée et/ou une lentille ophtalmique informative ;
- la lentille ophtalmique est une lentille à variation d'amplitude de type lentille ophtalmique électrochrome qui comprend deux parties rigides reliées entre elles pour former une cavité au sein de laquelle est disposé un matériau électrochrome et la pluralité de composants électroniques disposés sous forme d'une bande est reliée par une ligne équipotentielle à au moins une desdites parties rigides ;
- les composants électroniques disposés sous forme d'au moins une bande sont choisis parmi des composants passifs, par exemple un composant résistif, un composant capacitif et/ou des composants actifs, par exemple une diode, un composant radio, un dispositif d'imagerie, une batterie, un capteur, un moteur ;
- les composants électroniques disposés sous forme d'au moins une bande sont reliés entre eux par au moins un fil conducteur et/ou une piste conductrice adapté(e) à véhiculer simultanément de la puissance électrique et au moins un signal relatif à une donnée ;
- les composants électroniques disposés sous forme d'une bande ont été déposés directement au contact de la lentille ophtalmique ;
- les composants électroniques disposés sous forme d'une bande ont été préalablement disposés sur un support formant une bande puis ledit support déposé au contact de la lentille ophtalmique.

La présente invention vise également un procédé de réalisation d'un dispositif ophtalmique que définie dans les revendications et qui comprend une lentille ophtalmique pour lunette et une pluralité de composants électroniques disposés sous forme d'au moins une bande au contact et en périphérie de ladite lentille ophtalmique, où ledit procédé comprend les étapes suivantes :
- approvisionnement d'une lentille ophtalmique non détourée ;
- approvisionnement d'un contour de détourage de la lentille ophtalmique ;
- approvisionnement d'une bande souple comprenant des composants électroniques disposés sur un support ;
- découpe de la lentille ophtalmique selon le contour de détourage pour produire une lentille ophtalmique détourée;
- fixation de la bande souple en périphérie de la lentille ophtalmique détourée.

De manière usuelle, on entend par « lentille ophtalmique non détourée » une lentille ophtalmique dont la dimension est destinée à permettre une adaptation dans une pluralité de montures ; une lentille ophtalmique non détourée est donc de dimension supérieure à celle de la lentille détourée dont le contour est défini en fonction d'une monture choisie.

D'autres caractéristiques et avantages de la présente invention apparaîtront dans la description détaillée suivante, se référant aux dessins annexés dans lesquels :
- La figure 1 est un schéma d'une bande sur laquelle est disposée une pluralité de composants électroniques ;
- La figure 2 est un schéma d'un dispositif ophtalmique selon la présente invention ;
- La figure 3 est un schéma partiel d'un autre dispositif ophtalmique selon la présente invention ;
- La figure 4 est un schéma d'un autre dispositif ophtalmique selon la présente invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques. Par ailleurs et afin de faciliter la compréhension des figures, les éléments représentés ne sont pas nécessairement à l'échelle. Par souci de clarté, seuls les éléments utiles à la compréhension des modes de réalisation décrits ont été représentés et seront détaillés.

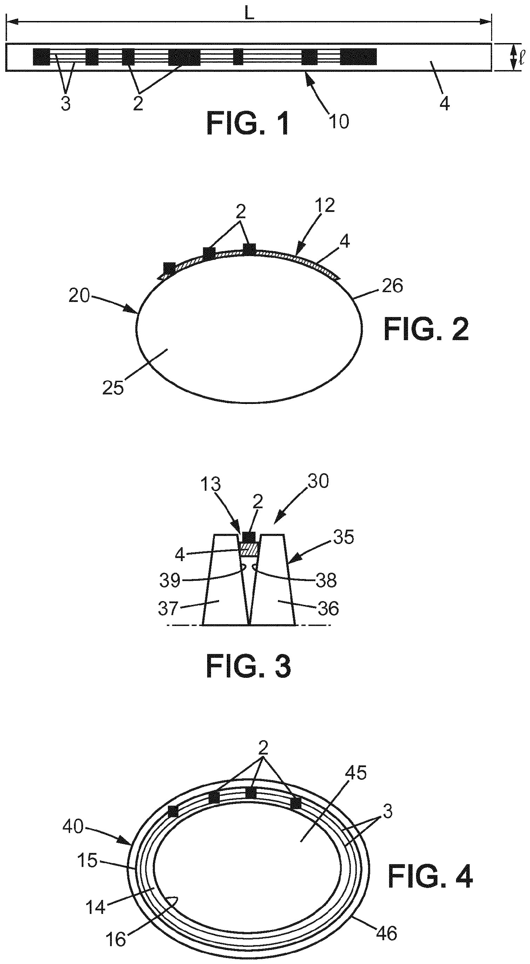

La figure 1 est un schéma d'une bande 10, mise en œuvre dans la présente invention, qui comprend un support 4 sur lequel est disposée une pluralité de composants électroniques 2 reliés entre eux par des fils électriques 3. Cette bande 10 est ouverte et sensiblement rectiligne. La longueur de la bande est noté L et sa largeur l ; selon un mode de réalisation, L/l ≥ 5, par exemple L/l ≥ 10, voire L/l ≥ 50. Selon un mode de réalisation la largeur l est comprise entre 1 et 10 mm et la longueur L est comprise entre 5 et 100 mm. Selon un mode de réalisation, l'épaisseur de la bande est comprise entre 1 mm et 5 mm et l'épaisseur du support est comprise entre 0.005 mm et 1 mm. Selon un mode de réalisation, les composants électroniques 2 ont des dimensions comprises entre 0.1 mm et 10 mm. Selon un exemple de réalisation, entre 10 et 100 composants électroniques sont disposés sur la bande 10.

La figure 2 est un schéma d'un dispositif ophtalmique 20 selon la présente invention qui comprend une lentille ophtalmique 25 pour lunette et une pluralité de composants électroniques 2 disposés sous forme d'au moins une bande 12, par exemple la bande 10 représentée en figure 1, sur un bord 26 situé en périphérie de ladite lentille ophtalmique. La bande 12 est suffisamment souple pour pouvoir se conformer à la forme du bord 26. La bande 12 peut être disposée sur un bord plat ou un bord légèrement arrondi de ladite lentille ophtalmique ou bien au moins partiellement disposée dans une rainure usinée dans le bord 26 de la lentille ophtalmique 25.

La figure 3 est un schéma partiel d'un dispositif ophtalmique 30 selon la présente invention qui comprend une lentille ophtalmique 35 pour lunette comprenant deux parties rigides 36, 37, usuellement dénommées coques, disposées au regard l'une de l'autre et une pluralité de composants électroniques 2 disposés sous forme d'au moins une bande 13, par exemple la bande 10 représentée en figure 1, au contact et en périphérie de la lentille ophtalmique 35. Les deux coques 36, 37, représentées partiellement sur la présente figure, sont reliées entre elles et agencées de manière à former une cavité au sein de laquelle est disposé un matériau ; selon un mode de réalisation, le matériau est un matériau électrochrome et au moins un des composants électroniques 2 génère un signal de nature à activer une variation colorimétrique du matériau électrochrome. Les coques 36, 37 comprennent chacune une surface interne respectivement 38, 39 qui s'écartent l'une de l'autre en périphérie de la lentille 35. Dans le mode de réalisation représenté, la bande 13 est située dans l'espace correspondant à cet écartement de manière à ce que la bande 13 affleure au bord externe de la lentille ophtalmique 35. Les coques 36 et 37 possèdent de plus chacune sur leurs surfaces internes 38 et 39 une couche conductrice, par exemple à base d'ITO (pour « Indium Tin Oxyde ») permettant d'appliquer un champ électrique sur le matériau électrochrome. La bande 10 possède alors des zones permettant d'assurer le contact électrique entre la bande 10 et les couches conductrices. Selon un mode de réalisation, un traitement photovoltaïque peut être présent sur la surface des coques 36, 37. La disposition de la bande 10 peut aussi être utilisé afin d'assurer un contact entre le traitement photovoltaïque sur au moins un surface du verre et la bande 10, et ainsi permettre d'alimenter la bande 10 en énergie. Ces contacts peuvent être assurés par exemple par des pastilles conductrices présentes sur un bus et l'utilisation d'une colle conductrice.

La figure 4 est un schéma d'un dispositif ophtalmique 40 selon la présente invention qui comprend une lentille ophtalmique 45 pour lunette et une pluralité de composants électroniques 2 disposés sous forme d'une bande 14 sur une surface de la lentille ophtalmique 45. Ladite surface peut être une surface arrière de la lentille, située du côté d'un porteur ou une surface avant de la lentille, située du côté d'un objet regardé par le porteur, ou éventuellement une surface interne. Dans ce dernier cas, la bande est alors davantage protégée des risques liés à l'abrasion. La bande 14 est délimitée par son bord externe 15 et son bord interne 16. La bande 14 est fermée et forme une boucle de forme sensiblement ovale. La zone où est située la bande 14 se trouve en périphérie de la lentille ophtalmique 45. Le bord externe 15 de la bande 14 est situé à proximité du bord 46 de la lentille 45. A titre d'exemple, la distance entre bord externe 15 de la bande et le bord 46 de la lentille est comprise entre 0.5 et 5 mm.

Selon un mode de réalisation, correspondant par exemple à l'une quelconque des figures 2 à 4, au moins un fil 3 est relié à au moins un point de la lentille ophtalmique de manière à former une ligne équipotentielle.

Selon un mode de réalisation, correspondant par exemple à l'une quelconque des figures 2 à 4, la bande respectivement notée 12, 13, 14 et comprenant une pluralité de composants électroniques offre une fonction d'antenne ; il est ainsi possible d'émettre et/ou de recevoir des signaux associés à des données, par exemple grâce aux technologies de communication dénommées Bluetooth ou Sigfox. Un tel dispositif peut permettre de gérer et/ou de paramétrer une ou plusieurs fonctionnalité(s) électro-commandée(s) associées à la lentille ophtalmique.

Selon un mode de réalisation, correspondant par exemple à l'une quelconque des figures 2 à 4, des composants électroniques de la bande respectivement notée 12, 13, 14 communiquent entre eux par des courants porteurs. Selon un mode de réalisation, un composant formant bus de communication alimente l'ensemble ; il est ainsi possible de limiter à deux le nombre de fils (également appelés « pistes ») reliant les composants électroniques de la bande.

Selon un autre mode de réalisation, la bande comprend deux fils (pistes) pour l'alimentation et au moins un fil (piste) indépendant pour la communication entre les composants électroniques. Selon un mode de réalisation, on utilise un bus I2C et deux fils pour la communication entre les composants électroniques.

Les dispositifs ophtalmiques représentés en figures 2 à 4 peuvent être disposés dans un équipement ophtalmique comprenant notamment une monture et un de ces dispositifs ophtalmiques. Selon un mode de réalisation, la bande notée 12, 13, 14 comprenant une pluralité de composants électroniques, représentée respectivement en figures 2 à 4, est masquée en partie ou en totalité par une partie par la monture.

Les lentilles ophtalmiques du dispositif ophtalmique de la présente invention, par exemple les lentilles ophtalmiques 25 et 45, peuvent être de différentes natures. Elles peuvent comprendre une ou plusieurs fonctionnalité(s) électro-commandée(s) correspondant aux lentilles de types énoncés ci-après :
- lentille ophtalmique électro-commandée à variation de phase, comme par exemple à indice variable électro-commandé, à forme variable grâce à un dispositif fluidique ;
- lentille ophtalmique électro-commandée à variation d'amplitude, comme par exemple à transmission électro-commandée, à variation colorimétrique grâce à un matériau électrochrome, à variation de teinte grâce à des cristaux liquides (« LCD » pour « liquid crystal display » en anglais), à polarisation active ;
- lentille électro-commandée pour piloter une fonction indépendante de la variation de phase et de la variation d'amplitude, comme par exemple un éclairage intégré à la lentille (par exemple pour permettre une luminothérapie), un dispositif pour chauffer la lentille (de manière à produire un effet antibuée ou pour réaliser un dispositif photochrome rapide).

La mise en place de la pluralité de composants électroniques disposés sous forme d'au moins une bande peut être réalisée selon plusieurs méthodes. Selon une méthode, on utilise des techniques de dépôts effectués directement dans la zone souhaitée de la lentille ophtalmique, par exemple en utilisant les techniques de plastronique, notamment pour déposer un support et/ou des fils (pistes) et les composants électroniques peuvent être déposés sur ledit support, ou des techniques de micro ou nano-lithographie.

Selon une autre méthode, on utilise un support flexible sur lequel on dépose des fils (pistes) et des composants électroniques pour former une bande souple ; on forme ainsi une bande qui peut être manipulée et disposée dans la zone souhaitée de la lentille ophtalmique. Il convient de noter qu'une bande ainsi réalisée peut être avantageusement disposée sur toute une variété de lentilles ophtalmiques grâce à la possibilité de conformer aisément une telle bande.

Il est possible de disposer une telle bande sur une lentille ophtalmique détourée, à partir d'une lentille ophtalmique non détourée, selon un contour de manière permettre l'assemblage avec une monture donnée.

Il est également possible de disposer une telle bande sur une lentille ophtalmique non détourée, puis de procéder au détourage de la lentille ophtalmique non détourée afin de produire une lentille ophtalmique détourée, destinée à être montée dans une monture donnée, en procédant au détourage de manière à ce que les composants électroniques soient disposés sous forme d'une bande en périphérie de ladite lentille ophtalmique détourée.

Il est également possible de disposer une telle bande sur un produit semi-fini de lentille ophtalmique, puis de procéder à l'usinage d'une lentille ophtalmique non détourée souhaitée et ensuite de procéder au détourage de la lentille ophtalmique non détourée afin de produire une lentille ophtalmique détourée, destinée à être montée dans une monture donnée, en procédant au détourage de manière à ce que les composants électroniques soient disposés sous forme d'une bande en périphérie de ladite lentille ophtalmique détourée.

Dans un mode de réalisation, le produit semi-fini est par exemple un verre dont une des surfaces est optiquement utilisable (surface finie) tandis que la surface opposée doit être modifiée, par surfaçage, afin d'apporter la correction optique nécessaire au porteur.

Dans ce cas, on détermine au préalable la position de la forme à détourer dans le produit semi-fini, de manière à ce que la bande soit située sur le contour de la lentille ophtalmique détourée. On peut par exemple translater et/ou pivoter la forme à détourer afin de positionner cette forme par rapport à la bande. Préférentiellement, on positionne la forme à détourer de manière à ce que la bande soit située au plus près du contour de la forme à détourer ,sur la plus grande partie de sa longueur, et en s'assurant que la bande est toujours intégralement contenue dans la forme à détourer. On peut par la suite, connaissant la position de la forme à détourer dans le produit semi-fini, surfacer la face non optique du produit semi-fini pour apporter la correction optique au porteur, puis détourer le produit semi-fini suivant la position de la forme détourée déterminée auparavant afin d'obtenir la lentille ophtalmique détourée.

Il est alors possible, à partir d'un même produit semi-fini, de réaliser différentes formes de lentilles ophtalmiques détourées pour lesquelles la bande est située en périphérie de la lentille.

Bien évidemment, l'invention n'est pas limitée aux modes de réalisation décrits précédemment et fournis uniquement à titre d'exemple.

## Revendications

1. Equipement ophtalmique comprenant au moins une monture et au moins un dispositif ophtalmique (20, 30, 40) pour lunette, ledit au moins un dispositif ophtalmique étant **caractérisé en ce qu'**il comprend une lentille ophtalmique (25, 35, 45) détourée montée dans ladite au moins une monture et une pluralité de composants électroniques (2) disposés sous forme d'au moins une bande (10, 12, 13, 14) au contact et en périphérie de ladite lentille ophtalmique, les composants électroniques ayant été préalablement disposés sur un support (4) pour former ladite bande, puis ledit support déposé au contact de ladite lentille ophtalmique de sorte que la bande comprenant lesdits composants électroniques soit fixée en périphérie de la lentille ophtalmique en étant masquée en partie ou en totalité par une partie de ladite au moins une monture.

2. Equipement ophtalmique selon la revendication 1, dans lequel la lentille ophtalmique (25) comprend deux surfaces principales et un bord (26) reliant lesdites deux surfaces principales, et où les composants électroniques (2) disposés sous forme d'une bande (10, 12) sont agencés en périphérie sur le bord de ladite lentille ophtalmique.

3. Equipement ophtalmique selon la revendication 1, dans lequel la lentille ophtalmique (45) comprend deux surfaces principales et un bord (46) reliant lesdites deux surfaces principales, et où les composants électroniques (2) disposés sous forme d'une bande (10, 14) sont agencés en périphérie sur au moins une des surfaces principales de ladite lentille ophtalmique.

4. Equipement ophtalmique selon la revendication 2, dans lequel le bord de la lentille ophtalmique comprend une rainure dans laquelle sont agencés les composants électroniques (2) disposés sous forme d'une bande (10).

5. Equipement ophtalmique selon l'une quelconque des revendications précédentes, dans lequel la longueur (L) de la bande (10) est supérieure ou égale à 10 fois la largeur (l) de ladite bande, voire par exemple la longueur de la bande est supérieure ou égale à 50 fois la largeur de ladite bande.

6. Equipement ophtalmique selon l'une quelconque des revendications précédentes, dans lequel la lentille ophtalmique (25, 35, 45) a une fonctionnalité électro-commandée activable en partie ou en totalité par au moins un des composants électroniques (2) disposés sous forme d'une bande (10, 12, 13, 14).

7. Equipement ophtalmique selon l'une quelconque des revendications précédentes, dans lequel la lentille ophtalmique (25, 35, 45) est une lentille ophtalmique à variation de phase et/ou une lentille ophtalmique à variation d'amplitude et/ou une lentille ophtalmique comprenant au moins une couche électro-commandée et/ou une lentille ophtalmique informative.

8. Equipement ophtalmique selon la revendication précédente, dans lequel la lentille ophtalmique (35) est une lentille à variation d'amplitude de type lentille ophtalmique électrochrome, où ladite lentille comprend deux parties rigides (36 et 37) reliées entre elles pour former une cavité au sein de laquelle est disposé un matériau électrochrome et où la pluralité de composants électroniques (2) disposés sous forme d'une bande (13) est reliée par une ligne équipotentielle à au moins une desdites parties rigides.

9. Equipement ophtalmique selon l'une quelconque des revendications précédentes, dans lequel les composants électroniques (2) disposés sous forme d'au moins une bande (10, 12, 13, 14) sont choisis parmi des composants passifs, par exemple un composant résistif, un composant capacitif et/ou des composants actifs, par exemple une diode, un composant radio, un dispositif d'imagerie, une batterie, un capteur, un moteur.

10. Equipement ophtalmique selon l'une quelconque des revendications précédentes, dans lequel les composants électroniques (2) disposés sous forme d'au moins une bande (10, 12, 13, 14) sont reliés entre eux par au moins un fil conducteur (3) et/ou une piste conductrice adapté(e) à véhiculer simultanément de la puissance électrique et au moins un signal relatif à une donnée.

11. Procédé de réalisation d'un équipement ophtalmique comprenant au moins une monture et au moins un dispositif ophtalmique (20, 30, 40) comprenant une lentille ophtalmique (25, 35, 45) pour lunette et une pluralité de composants électroniques (2) disposés sous forme d'au moins une bande (10, 12, 13, 14) au contact et en périphérie de ladite lentille ophtalmique, où ledit procédé comprend les étapes suivantes :
• approvisionnement d'une lentille ophtalmique non détourée ;
• approvisionnement d'un contour de détourage de la lentille ophtalmique ;
• approvisionnement d'une bande souple comprenant des composants électroniques disposés sur un support ;
• découpe de la lentille ophtalmique selon le contour de détourage pour produire une lentille ophtalmique détourée;
• dépôt dudit support, sur lequel ont été disposés lesdits composants électroniques, au contact de la lentille ophtalmique détourée pour la fixation de la bande souple en périphérie de la lentille ophtalmique détourée ; et
• montage de la lentille ophtalmique détourée dans ladite au moins une monture, de sorte que la bande comprenant lesdits composants électroniques soit masquée en partie ou en totalité par une partie de ladite au moins une monture.

## Patentansprüche

1. Ophthalmische Einrichtung, umfassend mindestens eine Fassung und mindestens eine ophthalmische Vorrichtung (20, 30, 40) für eine Brille, wobei die mindestens eine ophthalmische Vorrichtung **dadurch gekennzeichnet ist, dass** sie eine zugeschnittene ophthalmische Linse (25, 35, 45), die in die mindestens eine Fassung eingesetzt ist, und eine Vielzahl von elektronischen Bauelementen (2), die in Form mindestens eines Streifens (10, 12, 13, 14) in Kontakt mit und am Umfang der ophthalmischen Linse angeordnet sind, umfasst, wobei die elektronischen Bauelemente zuvor auf einem Träger (4) angeordnet worden sind, um den Streifen zu bilden, der Träger dann in Kontakt mit der ophthalmischen Linse aufgesetzt worden ist, so dass der die elektronischen Bauelemente umfassende Streifen am Umfang der ophthalmischen Linse befestigt ist und dabei teilweise oder vollständig durch einen Teil der mindestens einen Fassung maskiert wird.

2. Ophthalmische Einrichtung nach Anspruch 1, bei der die ophthalmische Linse (25) zwei Hauptflächen umfasst und einen Rand (26), der die beiden Hauptflächen verbindet, und wobei die in Form eines Streifens (10, 12) angeordneten elektronischen Bauelemente (2) am Umfang auf dem Rand der ophthalmischen Linse eingerichtet sind.

3. Ophthalmische Einrichtung nach Anspruch 1, bei der die ophthalmische Linse (45) zwei Hauptflächen umfasst und einen Rand (46), der die beiden Hauptflächen verbindet, und wobei die in Form eines Streifens (10, 14) angeordneten elektronischen Bauelemente (2) am Umfang auf mindestens einer der Hauptflächen der ophthalmischen Linse eingerichtet sind.

4. Ophthalmische Einrichtung nach Anspruch 2, bei welcher der Rand der ophthalmischen Linse eine Einkerbung umfasst, in der die in Form eines Streifens (10) angeordneten elektronischen Bauelemente (2) eingerichtet sind.

5. Ophthalmische Einrichtung nach einem der vorhergehenden Ansprüche, bei der die Länge (L) des Streifens (10) größer oder gleich dem 10-Fachen der Breite (l) des Streifens ist oder die Länge des Streifens beispielsweise sogar größer oder gleich dem 50-Fachen der Breite des Streifens ist.

6. Ophthalmische Einrichtung nach einem der vorhergehenden Ansprüche, bei der die ophthalmische Linse (25, 35, 45) eine elektrisch gesteuerte Funktion hat, die teilweise oder vollständig durch mindestens eines der in Form eines Streifens (10, 12, 13, 14) angeordneten elektronischen Bauelemente (2) aktivierbar ist.

7. Ophthalmische Einrichtung nach einem der vorhergehenden Ansprüche, bei der die ophthalmische Linse (25, 35, 45) eine ophthalmische Linse mit Phasenänderung und/oder eine ophthalmische Linse mit Amplitudenänderung und/oder eine ophthalmische Linse, die mindestens eine elektrisch gesteuerte Schicht umfasst, und/oder eine informative ophthalmische Linse ist.

8. Ophthalmische Einrichtung nach dem vorhergehenden Anspruch, bei der die ophthalmische Linse (35) eine Linse mit Amplitudenänderung vom Typ elektrochrome ophthalmische Linse ist, wobei die Linse zwei starre Teile (36 und 37) umfasst, die untereinander verbunden sind, um einen Hohlraum zu bilden, in dem ein elektrochromes Material angeordnet ist, und wobei die Vielzahl von in Form eines Streifens (13) angeordneten elektronischen Bauelementen (2) durch eine Äquipotentialleitung mit mindestens einem der starren Teile verbunden ist.

9. Ophthalmische Einrichtung nach einem der vorhergehenden Ansprüche, bei der die in Form mindestens eines Streifens (10, 12, 13, 14) angeordneten elektronischen Bauelemente (2) unter passiven Bauelementen, beispielsweise einem resistiven Bauelement, einem kapazitiven Bauelement, und/oder unter aktiven Bauelementen, beispielsweise einer Diode, einem Funkbauelement, einer Bildgebungsvorrichtung, einer Batterie, einem Sensor, einem Motor, gewählt sind.

10. Ophthalmische Einrichtung nach einem der vorhergehenden Ansprüche, bei der die in Form mindestens eines Streifens (10, 12, 13, 14) angeordneten elektronischen Bauelemente (2) untereinander durch mindestens einen leitenden Draht (3) und/oder eine Leiterbahn verbunden sind, der/die geeignet ist, gleichzeitig elektrische Leistung und mindestens ein Signal bezüglich eines Datenobjekts zu übertragen.

11. Verfahren zur Herstellung einer ophthalmischen Einrichtung, die mindestens eine Fassung und mindestens eine ophthalmische Vorrichtung (20, 30, 40) umfasst, welche eine ophthalmische Linse (25, 35, 45) für eine Brille und eine Vielzahl von elektronischen Bauelementen (2) umfasst, die in Form mindestens eines Streifens (10, 12, 13, 14) in Kontakt mit und am Umfang der ophthalmischen Linse angeordnet sind, wobei das Verfahren die folgenden Schritte umfasst:
• Beschaffung einer nicht zugeschnittenen ophthalmischen Linse;
• Beschaffung einer Zuschneidekontur für die ophthalmische Linse;
• Beschaffung eines flexiblen Streifens, der auf einem Träger angeordnete elektronische Bauelemente umfasst;
• Ausschneiden der ophthalmischen Linse entlang der Zuschneidekontur, um eine zugeschnittene ophthalmische Linse zu erzeugen;
• Aufsetzen des Trägers, auf dem die elektronischen Bauelemente angeordnet worden sind, in Kontakt mit der zugeschnittenen ophthalmischen Linse zur Befestigung des flexiblen Streifens am Umfang der zugeschnittenen ophthalmischen Linse; und
• Einsetzen der zugeschnittenen ophthalmischen Linse in die mindestens eine Fassung, so dass der die elektronischen Bauelemente umfassende Streifen teilweise oder vollständig durch einen Teil der mindestens einen Fassung maskiert wird.

## Claims

1. Ophthalmic apparatus comprising at least one frame and at least one spectacle ophthalmic device (20, 30, 40), said at least one ophthalmic device being **characterized in that** it comprises an edged ophthalmic lens (25, 35, 45) mounted in said at least one frame and a plurality of electronic components (2) placed to form at least one strip (10, 12, 13, 14) in contact with and peripherally on said ophthalmic lens, the electronic components having been placed beforehand on a carrier (4) in order to form said strip, said carrier then being deposited in contact with said ophthalmic lens so that the strip comprising said electronic components is peripherally fastened to the ophthalmic lens and partially or completely masked by a portion of said at least one frame.

2. Ophthalmic apparatus according to Claim 1, wherein the ophthalmic lens (25) comprises two main surfaces and an edge (26) connecting said two main surfaces, and wherein the electronic components (2) placed to form a strip (10, 12) are peripherally arranged on the edge of said ophthalmic lens.

3. Ophthalmic apparatus according to Claim 1, wherein the ophthalmic lens (45) comprises two main surfaces and an edge (46) connecting said two main surfaces, and wherein the electronic components (2) placed to form a strip (10, 14) are peripherally arranged on at least one of the main surfaces of said ophthalmic lens.

4. Ophthalmic apparatus according to Claim 2, wherein the edge of the ophthalmic lens comprises a groove in which the electronic components (2) placed to form a strip (10) are arranged.

5. Ophthalmic apparatus according to any one of the preceding claims, wherein the length (L) of the strip (10) is larger than or equal to 10 times the width (1) of said strip, or even for example the length of the strip is larger than or equal to 50 times the width of said strip.

6. Ophthalmic apparatus according to any one of the preceding claims, wherein the ophthalmic lens (25, 35, 45) has an electrically controlled functionality that is partially or completely activatable via at least one of the electronic components (2) placed to form a strip (10, 12, 13, 14) .

7. Ophthalmic apparatus according to any one of the preceding claims, wherein the ophthalmic lens (25, 35, 45) is a phase-varying ophthalmic lens and/or an amplitude-varying ophthalmic lens and/or an ophthalmic lens comprising at least one electrically controlled layer and/or an information-relaying ophthalmic lens.

8. Ophthalmic apparatus according to the preceding claim, wherein the ophthalmic lens (35) is an amplitude-varying lens of the electrochromic-ophthalmic-lens type, wherein said lens comprises two rigid portions (36 and 37) that are connected together to form a cavity within which an electrochromic material is placed and wherein the plurality of electronic components (2) placed to form a strip (13) is connected by an equipotential line to at least one of said rigid portions.

9. Ophthalmic apparatus according to any one of the preceding claims, wherein the electronic components (2) placed to form at least one strip (10, 12, 13, 14) are chosen from passive components, for example a resistive component, a capacitive component and/or active components, for example a diode, a radio component, an imaging device, a battery, a sensor, a motor.

10. Ophthalmic apparatus according to any one of the preceding claims, wherein the electronic components (2) placed to form at least one strip (10, 12, 13, 14) are joined together by at least one conductive wire (3) and/or conductive track suitable for simultaneously conveying electrical power and at least one signal relative to a datum.

11. Process for producing an ophthalmic apparatus comprising at least one frame and at least one ophthalmic device (20, 30, 40) comprising a spectacle ophthalmic lens (25, 35, 45) and a plurality of electronic components (2) placed to form at least one strip (10, 12, 13, 14) in contact and peripherally on said ophthalmic lens, wherein said process comprises the following steps:
• providing an unedged ophthalmic lens;
• providing an edging outline of the ophthalmic lens;
• providing a supple strip comprising electronic components placed on a carrier;
• cutting the ophthalmic lens to the edging outline in order to produce an edged ophthalmic lens;
• depositing said carrier, on which have been placed said electronic components, in contact with the edged ophthalmic lens so as to fasten the supple strip to the edged ophthalmic lens peripherally; and
• mounting the edged ophthalmic lens in said at least one frame, so that the strip comprising said electronic components is partially or completely masked by a portion of said at least one frame.
